# EUROPEAN PATENT APPLICATION

(11) **EP 3 756 467 A1**
(43) Date of publication of application: **30.12.2020**
(21) Application number: 20181917.4
(22) Date of filing: 24.06.2020
(51) Int. Cl.: A22C 17/00, A22C 17/02

(54) **IMPROVED FLOATING BELT**

(30) Priority: 26.06.2019 IT 201900010182
(71) Applicant: Grasselli S.p.A., 42020 Albinea (RE) (IT)
(72) Inventor: GRASSELLI, Giorgio, 42020 Albinea (REGGIO EMILIA) (IT)
(74) Representative: Gagliardelli, Fabrizio

(57) **Abstract**

The conveying apparatus (1) for an industrial slicing machine comprises: a lower conveyor (2) designed to drag restingly a food product in a feed direction (D); and an upper conveyor (4) of floating type arranged above the lower conveyor (2) and comprising a frame (40) that carries a motor-driven conveyor belt (41), adapted to push in the feed direction (D) the product dragged by the lower conveyor (2) and closed in a loop around a plurality of linkage devices (50, 51, 52, 53, 54, 55) mounted on the frame. The belt (41) defines two active branches (42, 43) facing the lower conveyor (2), adapted to contact above and push the product and connected together by a recessed branch (44) that defines a concavity (C) facing the lower conveyor (2).

## Description

The present invention relates to a floating belt for industrial slicing machines.

In particular, the present invention relates to a floating belt especially destined for use with slicing machines used in the food industry for cutting products such as meat, fowl, fish, vegetables, both fresh and cooked, preferably filleted or without cartilage.

Industrial slicing machines are known that are used to process products designed, for example, for large scale retail, for school or company canteens, or for catering.

A known type of slicing machine comprises a cutting station and a lower conveyor belt for conveying the product to the cutting station, and two upper belts, arranged above the conveyor belt, which have the function of pressing the product.

The cutting station comprises a plurality of horizontal blades, mounted in an intermediate position between the two upper belts, under whose blades the lower conveyor belt extends, so that the product pushed into contact with the blades is automatically cut into slices.

Currently, a very common type of these machines comprises upper belts of the so-called "floating" type, i.e. they are mounted on respective vertically movable frames that are provided with elastic adjusting mechanisms for adjusting the pressure exerted on the product.

Although this known system generally produces satisfactory results it is not however free from limits, the main ones of which are set out below:
First of all, although in principle the two belts, i.e. the front belt upstream of the blades and the rear belt, i.e. the belt downstream of the blades, should be so placed as to be at the same distance from the lower conveyor, in order to ensure even traction before and after cutting of the slices, in practice the rear floating belt is placed slightly higher and thus further from the common lower conveyor.

In fact, when the product to be cut advances beyond the rear edge of the front floating belt, which faces the blades, there is an elastic expansion that remains after cutting inasmuch as it is no longer subject to the pressure of the front belt; when the cut or partially cut product then meets the front face of the rear floating belt, if the latter is not sufficiently high, interference is produced that can lead to deformation of the packet of slices obtained from the initial product.

This condition occurs more often and is more acute when the two belts have different heights because of loss of the setting or wear to the elastic means that hinder the ascent of the belts.

Accordingly, in order to avoid this condition and too frequent maintenance, the rear belt tends to be positioned higher than the front belt, with the drawback that in the case of low products, the rear belt will have reduced efficacy.

A further problem, due to the elastic dilation of the product that exceeds the front floating belt, occurs when all the blades are always maintained fitted regardless of how high the product is and of how many slices have to be obtained.

In these circumstances, especially the one in which the relative position between the blades and the front belt changes during the use of the slicing machine, during cutting the surface of the upper slice that is being formed may touch the rear non-cutting edge of the unused first blade placed above the upper slice; in this case, sliding against this rear edge of the blade affects and sometimes spoils the surface of the food product.

For this reason, only blades tend to be fitted to the machine that will be used to cut in the same manner products with similar dimensions and features, with the drawback that each time that the machine has to be used to cut a different product, for example a product that is thicker or thinner than the previous product, or with a different method, the blades have to be dismantled and refitted, which requires the production line to be shut down for about fifteen minutes, without counting labour costs and the increased risk of fitting errors or accidents.

Further, although the floating belts of known machines are designed to have the same tangential velocity as the belt, in practice, over time small differences in velocity develop between the two belts that affect the quality of the cut; in fact, when a product is in the cutting section of the machine and is simultaneously affected by both the floating belts, if the latter travel at similar but different velocities, the resulting slices will have a surface that has a structure that is visible to the naked eye that is considered to be aesthetically displeasing or a sign of inferior quality by the consumer.

The technical task underlying the present invention is thus to provide a conveying apparatus designed to be used with slicing machines that is able to satisfy the requirement specified above.

This technical task is reached by the conveying apparatus produced in accordance with claim 1.

Further features and advantages of the present invention will become more apparent from the approximate and thus non-limiting description of a preferred, but not exclusive, embodiment of a conveying apparatus, as illustrated in the accompanying drawings, in which:
- figure 1 is a lateral longitudinal sectional view of the apparatus of the invention;
- figure 2 is an axonometric view of the upper conveyor of the apparatus of the preceding figure;
- figure 3 is the partially broken preceding view; and
- figure 4 is an axonometric view of a used linkage device of the upper conveyor;

With reference to the appended figures: reference numeral 1 indicates a conveying apparatus according to the invention.

In detail, the provided conveying apparatus 1 is especially designed for use with a slicing machine or "slice cutter" designed for cutting food products such as fowl, meat, fish, vegetables, both fresh and cooked, preferably filleted or without cartilage.

The conveying apparatus 1 can integrate the cutting station of the slicing machine, upstream of which there is the inlet I, from which the products to be sliced arrive, one at a time, at the cutting station.

Further, the conveying apparatus 1 is provided with an outlet U, downstream of the cutting station.

The various components comprised in the stations which make up the machine are supported by a support bench that can be rested on the ground.

The machine with which the conveying apparatus 1 is used could also not be a slicing machine but if it is a slicing machine, it can be like one of the slicing machines manufactured by the applicant or like one of those disclosed in patents EP2946668A or EP3318516 that are understood to be incorporated here by way of reference for everything that does not relate to the single upper floating belt.

Further, for ease of illustrative exposition and without departing from the general description, reference will be made by way of example to the case in which the invention is implemented on a horizontal blade slice cutter and the products to be sliced are chicken breasts or similar partially deformable products that have to be sliced before being placed in trays intended for large scale retail.

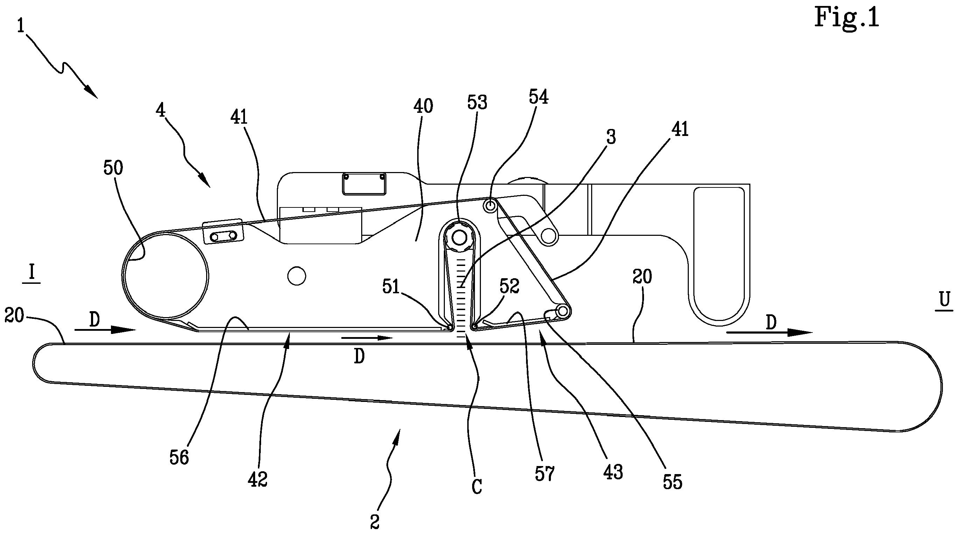

The conveying apparatus 1 of the invention comprises a lower motor-driven conveyor 2, which includes a rectilinear and preferably horizontal conveyor belt 20 that traverses the cutting station, so as to feed thereto one at a time the whole products along a feed direction indicated by D in figure 1, and then convey the slices to the outlet.

The cutting station comprises a plurality of blades 3 for slicing the products fed to the cutting station whose blades have a reciprocal distance (or "cutting pitch") that can be fixed or variable.

The blades 3 can be made of hard and elastic material, for example steel.

In the illustrated example, the blades 3 are fifteen in number, and have a small thickness, and in any case the invention can also include a different number or type of blades.

Still more in detail, the aforementioned belt 20 of the lower conveyor 2, which drags the products resting on the upper surface thereof, extends below the blades 3.

In practice, the belt 20 of the lower conveyor 2 defines a horizontal conveyor plane, above which the blades 3 are located, in such a way that upstream of the blades the whole product and, downstream, the sliced product are advanced.

The blades 3 are horizontal and parallel to one another, at least along a section with which they come into contact with the products and preferably, they are aligned along an ideal vertical cutting plane, i.e. they are superimposed on one another vertically.

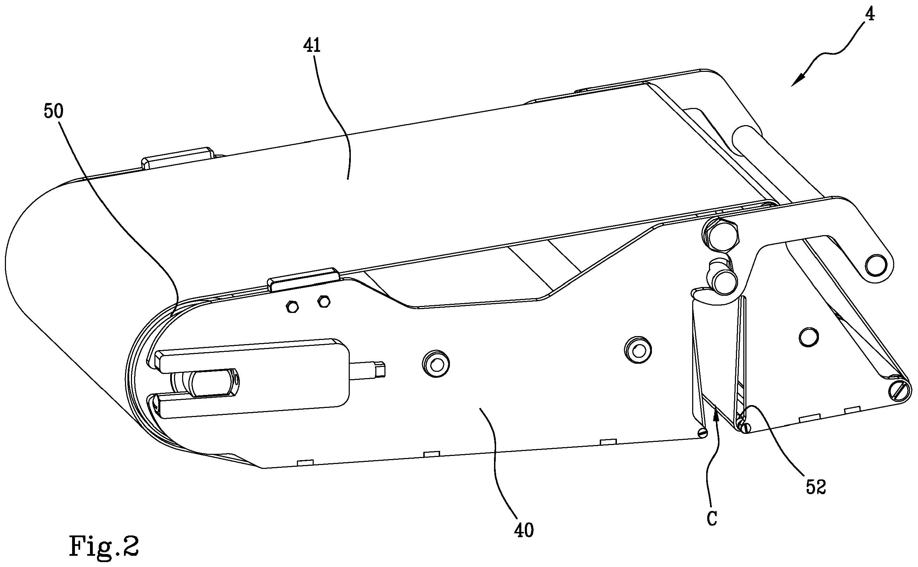

The conveying apparatus 1 of the invention includes an upper conveyor 4 of floating type (shown in figures 1, 2 and 3) arranged above the lower conveyor 1 and comprising a frame 40 that carries in a solidly constrained manner a motor-driven conveyor belt 41 that is adapted to push in the feed direction D the product and is closed in a loop around a plurality of linkage devices 50, 51, 52, 53, 54, 55 mounted on the frame 40.

The upper conveyors are also often called only "upper belts" for short, and, if they are of the floating type also only "floating belts"; so below, "belt" will mean the belt itself and "floating belt" will be used as a synonym of upper conveyor 4.

One specific aspect of the invention is that the floating belt 4, or upper conveyor thereof, comprises a single frame 40 with adjustable height and pressure and a single belt 41 for pushing in the feed direction D the products carried by the lower conveyor 2, replacing the two belts with relative prior art frames.

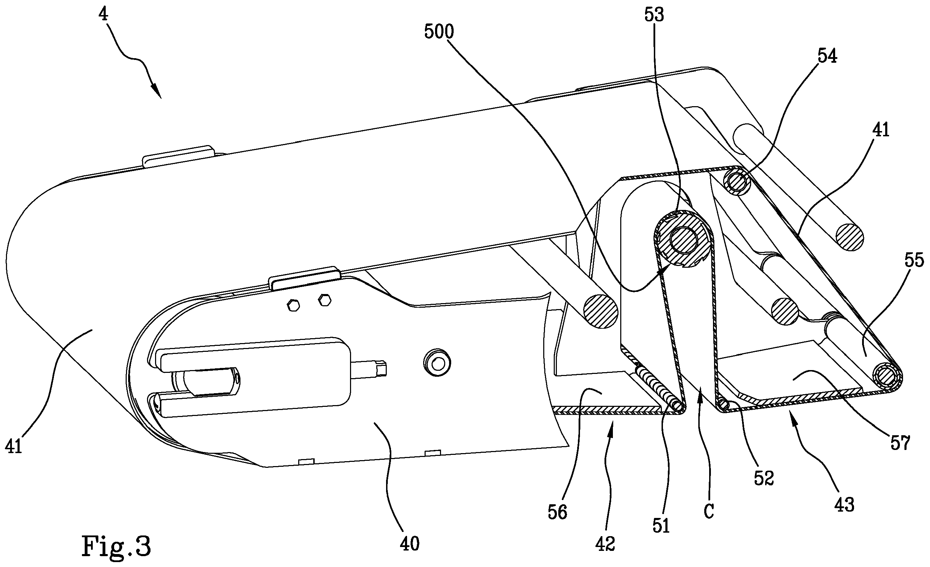

More precisely, the aforementioned single belt 41 defines two active branches 42, 43, one of which is placed upstream and the other of which is placed downstream of the blades 3 (see figs 1 and 3), which are used instead of the two belts of the prior art, with advantages that the latter are unable to obtain.

Still more in detail, the two active branches 42, 43 face the lower conveyor 2 and are preferably oriented like the latter, i.e. they have the respective longitudinal extent axes parallel and arranged on the same ideal vertical plane.

The two active branches 42, 43 are designed to contact above and push forward the aforesaid product and are connected together by a recessed branch 44 that defines a concavity C facing the lower conveyor 2.

In practice, the only frame 40 of the floating belt 4 is movable vertically, for example along vertical guides, and can be adjusted in height just as the pressure can be adjusted that is exerted by the belt 41 on the food products and the preload of the elastic elements that dampen the pressure, urging the product downwards, i.e. the lower conveyor 2.

As known, the floating belts can be fixed at a certain height with respect to the belt 20 of the lower conveyor 2 and are configured to receive with interference the food product to be sliced or sliced food product (i.e. the packet of layered slices) and have an adjustable pressure system provided with elastic means that enables the floating belt to be lifted when the product passes to exert preset pressure thereupon from top to bottom so as to have optimum belt adhesion for good thrust in addition to maintaining the physical properties of the product and to enable the product to be cut whilst it is maintained pressed.

In the invention, there is a single floating belt 4, provided with only one frame 40 to which a single belt 41 is fitted in a solidly constrained manner that is driven by a motor splined on one of the linkage devices.

The loop sliding path of the belt 41 is such as to define, by the aforesaid recess C, a seat that is adapted to house the cutting blades 3 with the possibility of make different blades 3 operative according to the number of slices desired and to the thickness of the product to be cut, adjusting the height of the floating belt 4 and/or adjusting the height of the blades 3 (see figure 1).

Preferentially, the belt 41 of the upper conveyor 4 is driven slidingly at a constant tangential velocity that is equal to that of the belt of the lower conveyor 2.

Before illustrating further constructional aspects of the invention, it is explained briefly how the invention is able to overcome the limits of the prior art.

First of all, the first active branch 42, the front active branch, is always in the same position with respect to the second active branch 43, the rear active branch, and vice versa.

As a result, the positions of the two active branches 42, 43 with respect to the belt 20 of the lower conveyor 2 are constant or, if during use there were to be sudden and random variations of the height of the common frame 40, also the variation of the position of the two branches 42, 43 would be the same; in practice, the relative position thereof never changes.

The invention accordingly enables the prior art contrivances to be avoided completely relating to greater lifting of the rear belt or to the fact of avoiding fitting all the blades 3 together and then dismantling and if necessary refitting the blades 3.

In particular, the fact that with the invention all the blades 3 can be maintained fitted regardless of which are operating in a specific operating step of the plant avoids the plant stop that was discussed in the description of the prior art and use thereof is made cheaper and safer.

Further, as a single belt 41 is dragged by a single motor-driven linkage device 50, the speed of the first active branch 42 is equal to that of the second active branch 43, thereby preventing the surface defects arising that make slices less appetizing for the market.

It should be noted that when in this description positioning terms like "upper", "lower", "front" and "rear" are used, reference is made to the orientation of the components of the invention during use, i.e. to when the conveying apparatus 1 is fitted to a machine resting on the ground and the front parts are those nearer the inlet I and the rear parts are those nearer the outlet U, towards which the aforesaid feed direction D of the products points (see figure 1).

In the preferred embodiment shown in the attached figures, the upper conveyor 4 includes two inner lower linkage devices 51, 52, which define respective ends of said active branches 42, 43, facing one another and an outer linkage device 53, located above the inner lower linkage devices 51, 52, and in a central position in relation thereto, around which the belt 41 slides, thereby defining the aforesaid concavity C.

In practice, the first active branch 42 extends to the feed direction D as far as an edge that slides on an inner linkage device 51 and then continues upwards to where an outer linkage device 53 is located that is placed further forwards and then descends again to find the other end inner linkage device 52 from which the second active branch 43 starts.

The two inner end linkage devices 51, 52 are lower than the outer upper linkage device 53, which in turn is on a vertical plane comprised between those that include the two inner end linkage devices 51, 52; then the latter two can also be substantially at the same height with respect to the belt 20 of the lower conveyor 2 and are preferably idle.

The terms "inner" and "outer" associated with the linkage devices refer to positioning of the linkage devices inside or outside the loop defined by the belt 41 of the upper conveyor 4.

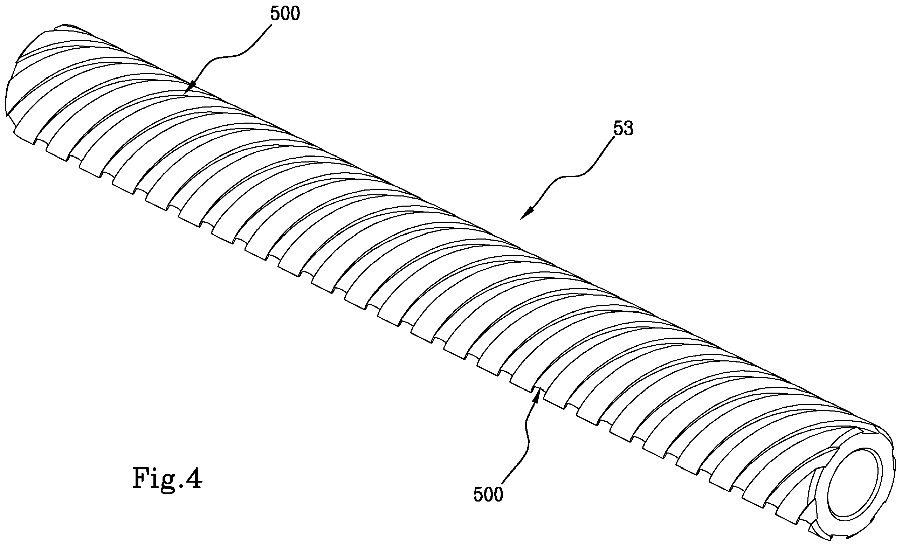

The aforementioned outer linkage device 53 is preferably idle and is provided with a helical groove 500 obtained on the cylindrical lateral surface thereof (see figure 4); this groove 500 which is adapted to remove, by an endless screw, product residue from the outer surface of the belt 41 with which it comes into contact during use.

As said, the upper conveyor 4 comprises at least one motor-driven linkage device 50 that drags the belt 41 which is preferably identified by a greater inner linkage device 50 placed in a rear end portion of the belt 41, i.e. downstream of the second active branch 43.

Preferably, an upper inner linkage device 54 is provided that is higher than the outer linkage device 53, and a front inner linkage device 55 that is placed upstream of the first active branch 42.

Preferably, the frame 40 features two inner planar planes 56, 57 that are so positioned as to contact the inner surface of the upper belt 41 at the two active branches 42, 43, so as to guide the belt 41 that slides thereupon and maintain the correct shape and tension of the belt 41 so as to define a rigid abutment for the products that have to be pressed and pushed by the active branches 42, 43.

Further, the first active branch 42 can be parallel to the belt 20 of the lower conveyor 2 and the second active branch 43 can be tilted with respect to the belt 20 of the lower conveyor 2, preferably in a different manner so as to increase the reciprocal distance in the feed direction D (as seen in figure 1).

The operation of the invention is described below.

A chicken breast arrives at the inlet I carried restingly on the belt 20 of the lower conveyor 2 along the feed direction D.

At a certain point the chicken breast meets the first active branch 42 that presses the chicken breast against the belt 20 of the lower conveyor and pushes the chicken breast in the same feed direction D.

At the end of the first active branch 42, the chicken breast meets the blades 3 and is sliced whilst it is still subjected to pressure and the already sliced parts of the product are received by the second active branch 43 that exerts the same pressure as the first active branch 42 and pushes them in the direction D at the same speed.

Progressively, all the chicken breast is sliced and goes beyond the second active branch 43 to continue advancement to the outlet U, on the lower conveyor 2, in the form of a packet of slices of chicken.

## Claims

1. An apparatus (1) for conveying a machine, such as, for example, an industrial slicing machine, comprising:
a lower conveyor (2) designed to feed a product in a feed direction (D); and
an upper conveyor (4) of the floating type positioned above the lower conveyor (2) and comprising a frame (40) which carries a motor-driven conveyor belt (41), designed to push in the feed direction (D) said product fed by the lower conveyor (2) and closed in a loop around a plurality of linkage devices (50, 51, 52, 53, 54, 55) mounted on the frame;
**characterised in that** the belt defines two active branches (42, 43) facing the lower conveyor, designed to make contact above and push the above-mentioned product and connected together by a recessed branch (44) which forms a concavity (C) facing towards the lower conveyor (2).

2. The apparatus (1) according to the preceding claim, wherein the upper conveyor (4) includes two inner lower linkage devices (51, 52) at respective ends of said active branches (42, 43) and an outer linkage device (53), located above said inner lower linkage devices (51, 52) about which the belt (41) slides, thereby defining the above-mentioned concavity (C).

3. The apparatus (1) according to the preceding claim, wherein said outer linkage device (53) is provided with a helical groove (500) made on the lateral surface, designed to remove product residue from the surface of the belt (41).

4. The apparatus (1) according to any one of the preceding claims, wherein the frame (40) is fitted with two inner planar plates (56, 57) positioned in such a way as to make contact with the inner surface of the belt (41) at the two active branches (42, 43).

5. The apparatus (1) according to any one of the preceding claims, wherein the second active branch (42) is inclined relative to the lower conveyor (2).

6. The apparatus (1) according to any one of the preceding claims, wherein the first active branch (43) is parallel to the lower conveyor (2).

7. A slicing machine comprising a conveying apparatus (1) according to any one of the preceding claims and comprising a plurality of blades (3) designed for cutting products conveyed by the apparatus and housed in the above-mentioned concavity (c) formed between the two active branches (42, 43) of the belt (41).
